# EUROPEAN PATENT APPLICATION

(11) **EP 2 706 579 A1**
(43) Date of publication of application: **12.03.2014**
(21) Application number: 13183224.8
(22) Date of filing: 05.09.2013
(51) Int. Cl.: H01L 31/042, F24J 2/52, F24J 2/46

(54) **Support structure for photovoltaic module mounting and methods of its use**

(30) Priority: 10.09.2012 US 201213607912
(71) Applicant: PrimeStar Solar, Inc, Arvada, CO 80004 (US)
(72) Inventor: Reed, Max William, Arvada, CO Colorado 80004 (US)
(74) Representative: Thompson, Andrew John

(57) **Abstract**

Photovoltaic module 100 are provided, along with method of their construction. The photovoltaic module 100 includes a window substrate 104; a photovoltaic material 106; and an encapsulation substrate 102 laminated to the window substrate 104 with the photovoltaic material 106 positioned therebetween. A support structure 120 is mounted onto a back surface 103 of the encapsulation substrate 102 to inhibit bowing of the encapsulation substrate 102. The support structure 120 can be indirectly mounted onto the back surface on hundred and 3 with an intermediate material (e.g., an adhesive strip) positioned therebetween. The support structure 120 can include ridges 126 that define peaks 128 and valleys 130 that are configured to inhibit bowing of the support structure 120.

## Description

The present subject matter relates generally to a support structure for supporting a photovoltaic module (i.e., a solar panel) and, more particularly, to a methods of mounting the photovoltaic modules to a rack configured for use with such a support structure.

Solar power is considered one of the cleanest, most environmentally friendly energy sources presently available, and photovoltaic module arrays have gained increased attention in this regard. In photovoltaic module arrays, a plurality of individual photovoltaic modules are arranged adjacent to each other to maximize the number modules within the array having a certain size. As such, frameless photovoltaic modules have an advantage in such an array, since the inactive area at the edges of the individual photovoltaic modules can be minimized and adjacently arranged modules can be positioned nearer to each other.

Typically, the majority of photovoltaic modules are currently mounted to a racking system utilizing clamps. These clamps are not only costly and cumbersome, but also increase the installation cost and time required for forming the solar array. For frameless modules, the window and encapsulation substrates are typically used as a structural element of the system. As the photovoltaic module art moves to larger panel designs and/or thinner substrate constructions (e.g., thinner glass), the stresses across the substrates (particularly relatively thin glass substrates) of such frameless photovoltaic modules are increased.

Further, it is desired to reduce the cost of installation by making the individual photovoltaic modules capable of installation by only one worker.

As such, a need exists for a support structure that carries a substantial portion of the mechanical load of the module, along with a mounting scheme for its use, particularly without the need for specialty hardware (e.g., mounting clamps).

Aspects and advantages of the invention will be set forth in part in the following description, or may be obvious from the description, or may be learned through practice of the invention.

Photovoltaic module modules are generally provided, along with method of their construction. In one embodiment, the photovoltaic module includes a window substrate; a photovoltaic material; and an encapsulation substrate laminated to the window substrate with the photovoltaic material positioned therebetween. A support structure is mounted onto a back surface of the encapsulation substrate to inhibit bowing of the encapsulation substrate. In one embodiment, the support structure is indirectly mounted onto the back surface with an intermediate material (e.g., an adhesive strip) positioned therebetween. In certain embodiments, the support structure includes ridges that define peaks and valleys that are configured to inhibit bowing of the support structure.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

A full and enabling disclosure of the present invention, including the best mode thereof, directed to one of ordinary skill in the art, is set forth in the specification, which makes reference to the appended figures, in which:
FIG. 1 illustrates an exemplary embodiment of a support structure mounted on an encapsulation substrate of a photovoltaic module;
FIG. 2 illustrates a perspective view of the support structure shown in Fig. 1;
FIG. 3 illustrates a side view of the support structure shown in FIG. 2;
FIG. 4 illustrates an inner view of the support structure shown in FIG. 1;
FIG. 5 illustrates another exemplary embodiment of a support structure mounted on an encapsulation substrate of a photovoltaic module;
FIG. 6 illustrates yet another exemplary embodiment of a support structure mounted on an encapsulation substrate of a photovoltaic module;
FIG. 7 illustrates still another exemplary embodiment of a support structure mounted on an encapsulation substrate of a photovoltaic module; and
FIG. 8 illustrates a side view of one embodiment of an exemplary racking system for use with any of the support structures shown in Figs. 1-7.

Repeat use of reference characters in the present specification and drawings is intended to represent the same or analogous features or elements.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

A frameless photovoltaic module (i.e., a solar panel) is generally provided having a support structure configured to mount the photovoltaic module to a racking system, along with methods of their mounting. Due to the design of the support structure, individual photovoltaic modules can be mounted and/or secured to the racking system via standard bolts/screws, or a bolt/screw-free design.

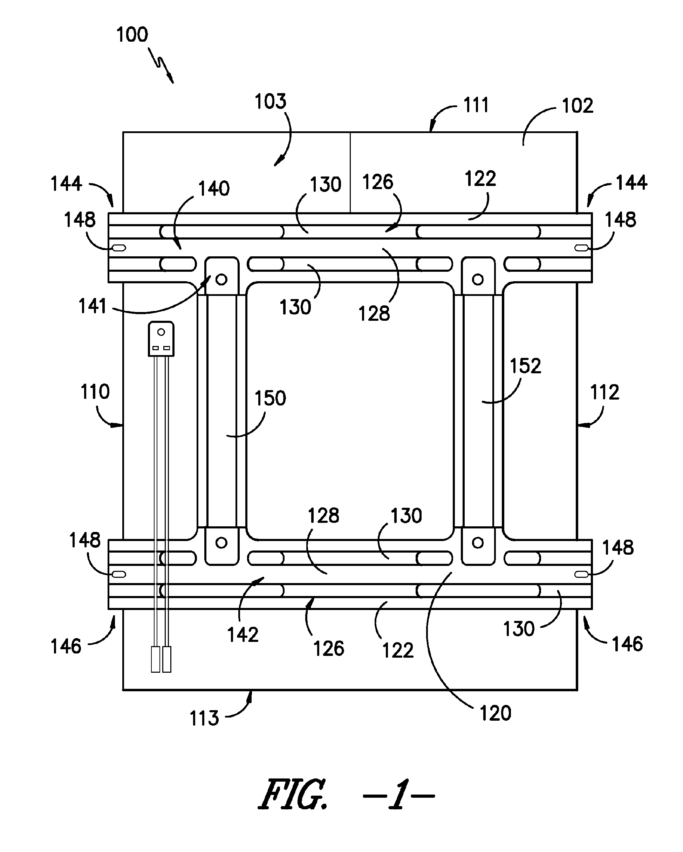

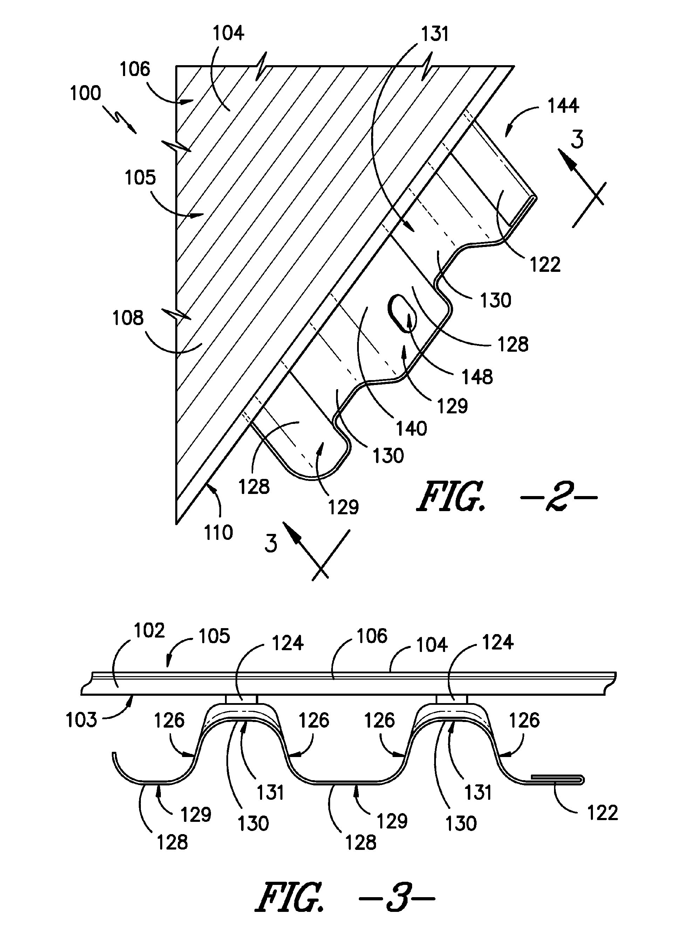

As shown in Fig. 1, a photovoltaic module 100 is shown having a support structure 120 bonded to the encapsulation substrate 102. Generally, the photovoltaic module 100 includes a window substrate 104 laminated to the encapsulation substrate 102 with a photovoltaic material 106 positioned therebetween and defining a plurality of photovoltaic cells 108, as shown in Fig. 2. For example, the photovoltaic material 106 can be a thin film stack of individual thin film layers.

The support structure 120 provides mechanical support to the laminate formed by the encapsulation substrate 102 and the window substrate 104. Thus, the mechanical loads are transferred through the support structure 120, as opposed to the encapsulation substrate 102 and/or the window substrate 104. The support structure 120 is particularly suitable for modules 100 where the encapsulation substrate 102 and/or the window substrate 104 are constructed from a glass (e.g., a glass/glass laminate) having common edges 110, 111, 112, and 113.

The photovoltaic module 100 shown is frameless, in that the edges 110, 111, 112, 113 are generally exposed on the photovoltaic module 100. Thus, the no additional structure (i.e., no "frame") is located along the edges 110,111,112,113 of the photovoltaic module 100. While the support structures 120 disclosed herein are particularly suitable for such a frameless construction, it is to be understood that the support structure 120 could be utilized on a framed module.

The support structure 120 includes ridges 126 that define peaks 128 and valleys 130. The peaks 128 are generally oriented away from the encapsulation substrate 102, while the valleys 130 are oriented in close proximity to the encapsulation substrate 102. The ridges 126 serve to inhibit bowing and/or deflection of the support structure 120, similar to the function of an I-beam in the mechanical engineering arts. Through the design of the support structure 120, the amount of material in and/or the size of the support of the support structure 120 can be minimized. Thus, a thin structural design can provide sufficient stiffness to the photovoltaic module 100.

The size and spacing of the peaks 128 and valleys 130 of the ridges 126 can be configured to provide the desired stiffness to the support structure 120. That is, the greater the depth of the ridges 126, the greater the stiffness of the support structure 120. As used herein, the "depth" of the ridges 126 is measured from the distance in the z-direction of the farthest point 129 of the peak 128 from the surface 103 of the encapsulation substrate 102 to the closest point 131 of the adjacent valley 130 from the surface 103 of the encapsulation substrate 102.

In certain embodiments, the depth of the ridges 126 can be greater than the thickness of the photovoltaic module 100. As used herein, the "thickness" of the photovoltaic module 100 is measured in the z-direction from the surface 103 of the encapsulation substrate 102 to the window surface 105 of the window substrate 104. As such, even if the thickness of the material in the support structure 120 is less than the thickness of the photovoltaic module 100, the ridges 126 serves to provide sufficient stiffness to the support structure 120 and the attached module 100.

For example, the depth of the ridges 126 can be about 1 cm to about 25 cm in certain embodiments. In particular embodiments, the depth of the ridges 126 can be about 1.5 cm to about 10 cm, such as about 2 cm to about 8 cm. Such dimensions are particularly suitable for a photovoltaic module having a thickness of about 2.5 mm to about 15 mm (e.g., about 5 mm to about 10 mm).

In the exemplary embodiment shown in Fig. 1, the support structure 120 is formed from multiple pieces that are joined together in a manner that forms a substantially rigid structure. Using multiple pieces allows for the type and amount of material utilized to for the support structure 120 to be limited, reducing the material cost of the support structure 120. However, in other embodiments, the support structure 120 can be formed from a single piece of solid material (e.g., stamped and/or molded).

Fig. 1 shows, for example, that the support structure 120 is constructed from a first cross-member 140 and a second cross-member 142. Each of the first cross-member 140 and the second cross-member 142 span across the back surface 103 of the encapsulation substrate 102 (i.e., from edge 110 to an opposite edge 112). Each of the first cross-member 140 and the second cross-member 142 includes at least one ridge 126 defining a peak 128 and a valley 130. In the embodiment shown, the first cross-member 140 and the second cross-member 142 are oriented substantially parallel to each other, and are oriented substantially parallel to an edge 110 of the module 100.

The photovoltaic module as in claim 9, wherein the support structure 120 further comprises a first linking member 150 and a second linking member 152 extending from the first cross-member 140 to the second cross-member 142 and connected thereto. Although shown having two linking members 150, 152, it is to be understood that any suitable number of linking members (including a single linking member) can be included within the support structure 120).

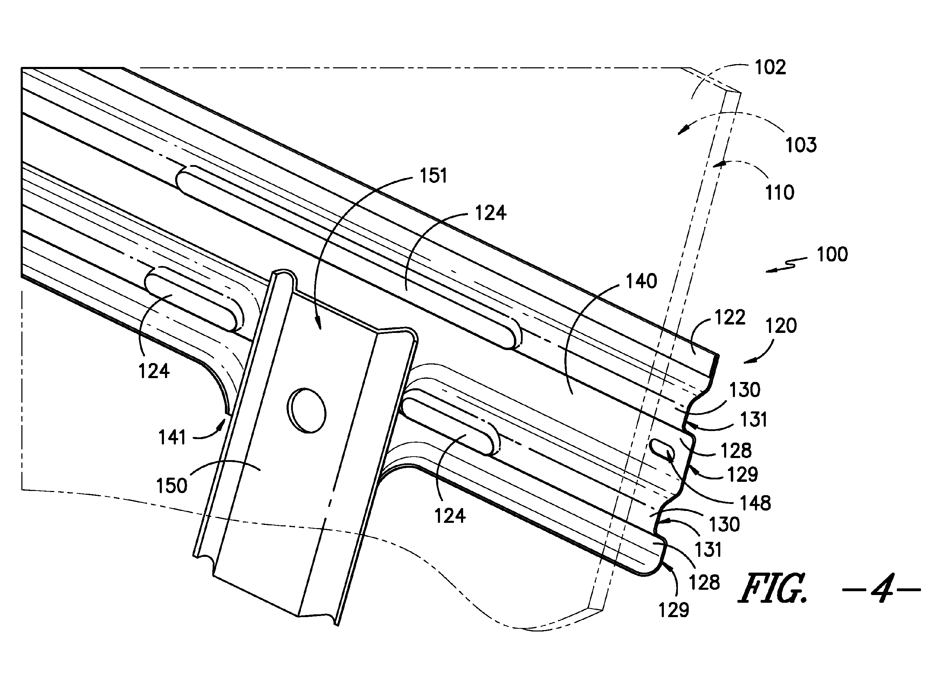

Fig. 4 shows an inner view (similar to that shown in Fig. 2, but with the module 100 transparent) of the junction formed between the first linking member 150 and the first cross-member 140, as an exemplary junction between a linking member and a cross-member. As shown, the linking member 150 is positioned between the back surface 103 of the encapsulation substrate 102 and the cross-member 140. Specifically, the cross-member 140 can form a receiving cavity 141 that is configured to mate with the end 151 of the cross-member 140.

At least one cross-member 140, 142 defines, in particular embodiments, an extended area 144, 146 (respectively) that reaches beyond opposite edges 110, 112 of the encapsulation substrate 102. These extended areas 144, 146 can be utilized to secure the support structure 120 to a racking system. For example, a mounting aperture 148 can be defined in the extended areas 144, 146 beyond the edges 110, 112 of the encapsulation substrate 102 (i.e., an "extended area"). Utilizing the mounting aperture(s) 148, an installer can secure the support structure 120 to a racking system via a standard washer/bolt/nut assembly, or similar securing mechanism (e.g., a screw).

In the exemplary embodiment of Fig. 1, the ridges 126 are generally oriented in a substantially parallel direction to each other across the back surface 103 of the encapsulation substrate 102. As shown, the ridges 126 are generally oriented in a direction to that is substantially parallel to an edge 110 of the back surface 103 of the encapsulation substrate 102.

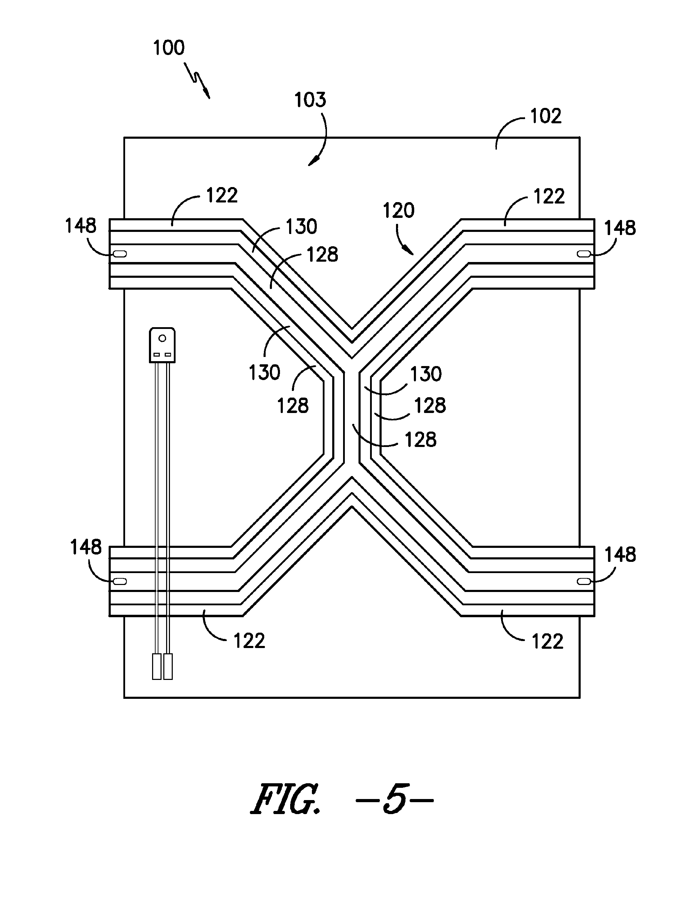

However, other configurations can be designed as desired. Referring to Fig. 5, for instance, shows that the support structure 120 defines an X orientation across the back surface 103 of the encapsulation substrate 102.

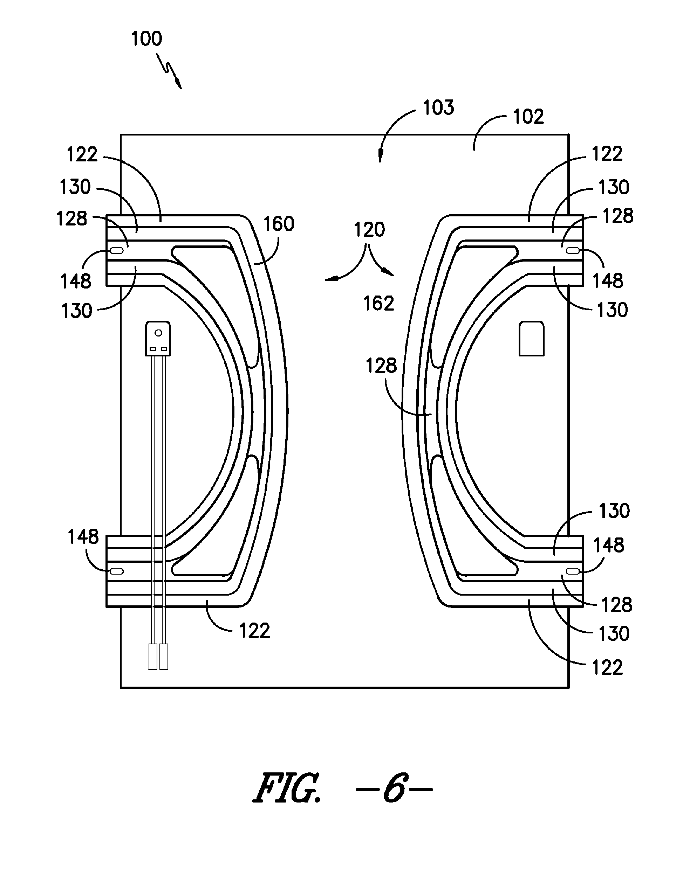

Alternatively, the embodiment of Fig. 6 shows the support structure 120 defining a pair of arches 160, 162.

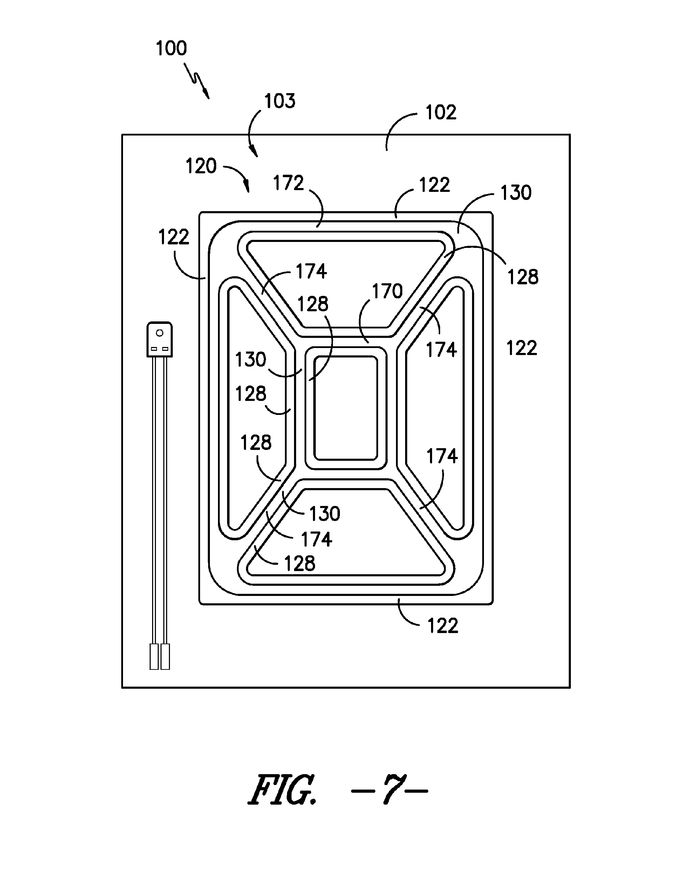

In yet another embodiment, Fig. 7 shows that the support structure 120 comprises an inner rectangle 170 and an outer rectangle 172. Linking beams 174 connect the inner rectangle 170 to the outer rectangle 172 at their respective corners.

The support structure 120 can be bonded to the encapsulation substrate 102 with any suitable adhesive (e.g., silicone) or with a tape (e.g., a foam tape). As shown, an adhesive strip 124 is present between the encapsulation substrate 102 and the support structure 120. In one embodiment, the positioning, size, and/or construction of the adhesive strip 124 is configured such that the support structure 120 does not contact the encapsulation substrate 102. Thus, encapsulation substrate 102 does not contact the support structure 120 to define a spacing 125 between the photovoltaic module 100 and the support structure 120. This spacing 125 allows for airflow between the photovoltaic module 100 and the support structure 120 thermally isolates the photovoltaic module 100 from the support structure 120 (and vice-versa).

For example, Fig. 1 shows that the adhesive strip 124 is positioned between the valleys 130 of the support structure 120 and the back surface 103 of the encapsulation substrate 102. In this manner, the valleys 130 of the support structure 120 are spaced apart from the back surface 103 of the encapsulation substrate 102, as discussed above such that the support structure 120 does not contact the encapsulation substrate 102 and allows airflow therebetween. Referring to the embodiment of Fig. 1, the adhesive strip 124 is positioned between the back surface 103 of the encapsulation substrate 102 and the linking member 150.

In one particular embodiment, the support structure 120 is constructed from galvanized steel. However, other materials can be utilized to form the support structure 120, such as extruded or stamped aluminum, a laminated composite material, a molded plastic, or roll formed steel. No matter the particular construction, the material utilized to form the support structure 120 should be able to support the weight of the photovoltaic module 100 while providing mechanical support across the surface of the module 100.

In one particular embodiment, the support structure 120 defines a flange 122 extending from an outer peak 128 and oriented substantially parallel to the back surface 103 of the encapsulation substrate 102. As shown, the flange 122 is reinforced flange having a thickness at the flange 122 that is greater than the thickness of the material elsewhere on the support structure 120.

The embodiments of each of Figs. 1-7 show a flange 122 defined on opposite sides of the support structure 120 and aligned to be substantially parallel to each other. Such a flange(s) 122 can interface with a racking system to provide a variety of mounting options, including bolt-free mounting. Thus, the reinforced flange 122 allows the photovoltaic module 100 to be mounted onto a variety of installations.

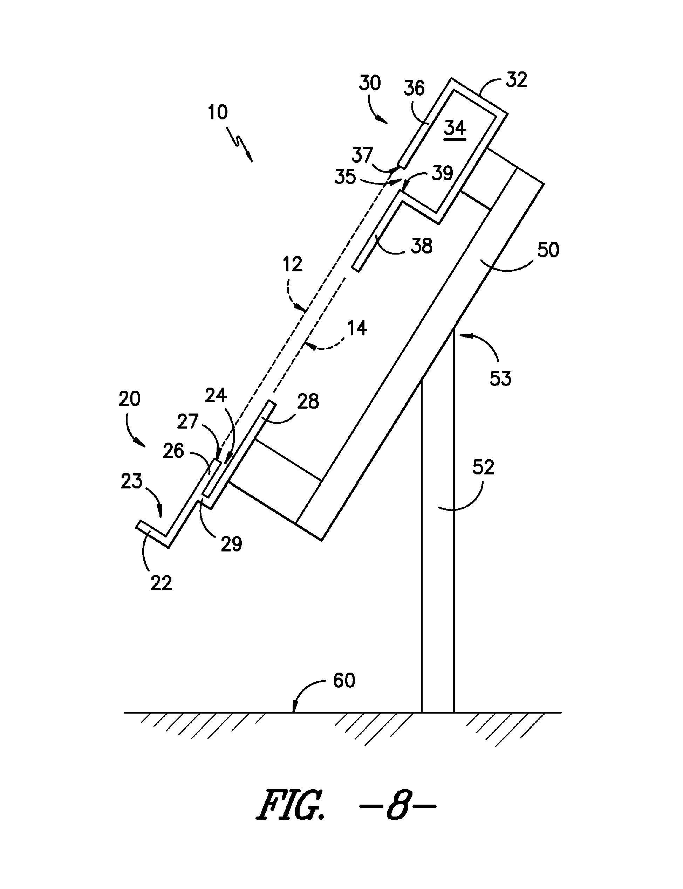

For example, the support structure 120 including flanges 122 is particularly suitable for mounting on the exemplary racking system 10 shown in Fig. 8. The racking system 10 generally includes a lower mounting unit 20 and an upper mounting unit 30. For example, the lower mounting unit 20 generally includes a support lip 22, a lower retaining wall 26, and a lower support wall 28. The upper mounting unit 30 generally includes an upper rail 32 connected to an upper retaining wall 36 and an upper support wall 38. Although shown as separate units 20, 30, it is to be understood that these units 20, 30 can be joined together (e.g., via a support wall bridging the lower support wall 28 and the upper support wall 38.

As stated, the lower mounting unit 20 of the racking system 10 generally includes a support lip 22 that extends from the lower retaining wall 26 (generally oriented in a retaining plane 12). The support lip 22 can extend from the lower retaining wall 26 at a relative angle (between the retaining plane 12 and the direction the support lip 22 is oriented) that is about 60° to about 120°, such that a corner junction 23 is formed. For example, the support lip 22 extends substantially perpendicular to the lower retaining wall 26, in particular embodiments. As such, the corner junction 23 is particularly suitable for receipt of the lower flange 122 of the support structure 120 of the photovoltaic module 100, and for subsequent pivoting of the photovoltaic module 100 on its lower flange 122 of the support structure.

Due to the orientation of the lower unit 20, both of the support lip 22 and the lower retaining wall 26 are oriented at an angle relative to the ground plane 60. For example, the support lip 22 can be oriented in a direction that is about 15° to about 75° from the ground plane 60, such as about 25° to about 65° from the ground plane 60. For instance, in one embodiment, the support lip 22 is oriented in a direction that is about 40° to about 50° from the ground plane 60. Similarly, the retaining plane 12 of the lower retaining wall 26 can be about 15° to about 75° from the ground plane 60, such as about 25° to about 65° from the ground plane 60. For instance, in one embodiment, the retaining plane 12 of the lower retaining wall 26 is about 40° to about 50° from the ground plane 60.

In another embodiment, the racking system 10 can be used to mount a photovoltaic module to the side of a building or a wall, for example. In such an embodiment, the retaining plane 12 could be substantially perpendicular (e.g., vertical) to the ground plane 60.

The lower support wall 28 is generally oriented in a support plane 14, and is positioned on an opposite side of the lower retaining wall 26 than the support lip 22. The lower retaining wall 26 and the lower support wall 28 are joined together by a resting rail 29 to define a retaining groove 24 therebetween. The resting rail 29 can be oriented in a direction that is about 60° to about 120° from the direction of the support lip 22. In one particular embodiment, the resting rail 29 generally parallel to the support lip 22 as shown in Fig. 8.

The upper mounting unit 30 of the racking system 10 generally includes an upper support wall 38 substantially oriented in the support plane 14. The during mounting of a photovoltaic module 100, the upper flange 122 contacts the upper support wall 38 during the mounting process and comes to rest and/or secured thereto.

In the embodiment shown in Fig. 8, the upper mounting unit 30 also includes an upper support wall 38 substantially oriented in the support plane 14, where the upper retaining wall 36 and the upper support wall 38 are connected via an upper rail 32 to define a mounting cavity 34. A mounting aperture 35 is generally defined in the open area between the lower end 37 of the upper retaining wall 36 and the upper end 39 of the upper support wall 38. In the embodiment shown, the lower end 37 of the upper retaining wall 36 does not extend over the upper end 39 of the upper support wall 38. As such, the upper flange 122 can be easily inserted into the mounting cavity 34 via the mounting aperture 35 during the mounting process. The upper rail 32 is generally sized and shaped to allow for receipt of the upper flange 122 into the mounting cavity 34 via the mounting aperture 35 and pivoting therein such that the support structure 120 can be oriented in the support plane 14.

In another embodiment, the upper unit 30 can only include an upper support wall 38 defining an upper end 39 (i.e., without an upper retaining wall 36 and/or the upper rail 32) that allows for the pivot action of the support structure 120.

As shown in Fig. 8, the lower mounting unit 20 and the upper mounting unit 30 are both individually connected to a bracket 50. The bracket 50 is, in turn, connected to a post 52. In one embodiment, the bracket 50 is rotationally connected to the post 52 at a pivot point 53. In this embodiment, racking system 10 can rotate the mounted photovoltaic modules in a direction desired, which can change depending on the time of day and/or season of the year. Alternatively, the lower mounting unit 20 and the upper mounting unit 30 can be connected to individual posts, respectively.

The positioning of a photovoltaic module 100 during the mounting process into the racking system 10 of Fig. 1 is generally described as follows, utilizing the lower flange 122 and the upper flange 122 of the support structure 120. As stated, the lower flange 122 and the upper flange 122 on the support structure 120 are generally spaced apart from the surface 103 of the photovoltaic module 100. The support structure 120 is adhered, in one particular embodiment, to the surface 103 (e.g., defined by an encapsulation substrate). In the embodiment shown, the lower flange 122 and the upper flange 122 are oriented substantially parallel to each other to define a common plane, which is particular suitable for use in the racking system 10. As discussed below and shown in Fig. 8, the lower flange 122 and the upper flange 122 are positioned in the support plane 14 once the photovoltaic module 100 is mounted onto the racking system 10.

As will be apparent below, the racking system 10 is particularly suitable for frameless photovoltaic modules 100, since no mounting mechanism on any side edge 110, 111, 112, 113 of the module 100 is relied upon to support the module. In fact, the racking system 10 avoids any contact between the photovoltaic module 100 and the racking system 10 anywhere but on the support structure 120.

As a first mounting step, the photovoltaic module 100 is positioned such that the support structure 120 is facing the racking system 10. Specifically, the support structure 120 is positioned such that the lower flange 122 is above the support lip 22 of the lower unit 20. Then, the lower flange 122 of the support structure 120 can be rested onto the support lip 22 and fitted into the corner junction 23. As such, the weight of the photovoltaic module 100 is supported by the lower unit 20 in the corner junction 23 defined by the support lip 22 and the lower retaining wall 26. The installer is therefore saved from supporting the weight of the photovoltaic module 100 during the installation process.

After resting the lower flange 122 of the support structure 120 within the corner junction 23, the photovoltaic module 100 can be pivoted such that the lower flange 122 of the support structure 120 rests on the support lip 22 and the upper flange 122 of the support structure 120 rests against the upper support wall 38. As such, upper and lower mounting units 20, 30 are, in the embodiment shown, positioned and sized such that the upper flange 122 of the support structure 120 can rotate past the lower end 37 of the upper retaining wall 36 to contact the upper support wall 38.

In another embodiment, the upper unit 30 can only include an upper support wall 38 defining an upper end 39 (i.e., without an upper retaining wall 36 and/or the upper rail 32) that allows for the pivot action of the support structure 120.

The photovoltaic module 100 can then be lifted such that the upper flange 122 of the support structure 120 slides against the upper support wall 38 and past the upper end 39 of the upper support wall 38. As such, the flange 122 of the support structure 120 can slide across the upper end 39 and can enter the mounting cavity 34 defined within the upper rail 32 via the mounting aperture 35 defined between the lower end 37 of the upper retaining wall 36 and the upper end 39 of the upper support wall 38. The photovoltaic module 100 is lifted a distance sufficient such that the lower flange 122 of the support structure 120 clears an upper end 27 of the lower retaining wall 26. Thus, after lifting, the photovoltaic module 100 can be pivoted such that the support structure 120 rests in the support plane 14 against the lower support wall 28 and the upper support wall 38. Specifically, the lower flange 122 contacts the lower support wall 28.

Finally, the lower flange 122 of the support structure 120 of the photovoltaic module 100 is lowered into the retaining groove 24 defined between the lower retaining wall 26 and a lower support wall 28. As such, the lower flange 122 of the support structure 120 can be rested onto the resting rail 29 extending between the lower retaining wall 26 and the lower support wall 28.

In certain embodiments, the support structure 120 of the photovoltaic module 100 is secured into the retaining groove 24 (e.g., to the lower support wall 28). For example, the support structure 120 can be secured via a fastening mechanism (e.g., a screw, a bolt, an adhesive material, a weld, etc.) to the lower support wall 28. In addition, or in the alternative, the support structure 120 of the photovoltaic module 100 can be secured to the upper support wall 38.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A photovoltaic module, comprising:
   a window substrate;
   a photovoltaic material;
   an encapsulation substrate, wherein the encapsulation substrate is laminated to the window substrate with the photovoltaic material positioned therebetween; and
   a support structure indirectly mounted onto a back surface of the encapsulation substrate to inhibit bowing of the encapsulation substrate.
2. The photovoltaic module as in clause 1, wherein the support structure does not contact the encapsulation substrate.
3. The photovoltaic module as in any preceding clause, wherein a spacing is defined between the photovoltaic module and the support structure to allow airflow between the photovoltaic module and the support structure.
4. The photovoltaic module as in any preceding clause, further comprising:
   an adhesive strip positioned between the encapsulation substrate and the support structure.
5. The photovoltaic module as in any preceding clause, wherein the support structure includes ridges that define peaks and valleys.
6. The photovoltaic module as in any preceding clause, wherein the ridges have a depth that is greater than a thickness of the laminate formed by the encapsulation substrate, the photovoltaic material, and the window substrate.
7. The photovoltaic module as in any preceding clause, wherein an adhesive strip is positioned between the valleys of the support structure and the back surface of the encapsulation substrate.
8. The photovoltaic module as in any preceding clause, wherein the photovoltaic module is frameless.
9. The photovoltaic module as in any preceding clause, wherein the support structure comprises a first cross-member and a second cross-member, wherein each of the first cross-member and the second cross-member span across the back surface of the encapsulation substrate, and wherein each of the first cross-member and the second cross-member includes at least one ridge defining a peak and a valley.
10. The photovoltaic module as in any preceding clause, wherein the first cross-member and the second cross-member are oriented substantially parallel to each other.
11. The photovoltaic module as in any preceding clause, wherein the support structure further comprises a linking member extending from the first cross-member to the second cross-member and connected thereto.
12. The photovoltaic module as in any preceding clause, wherein the linking member is positioned between the back surface of the encapsulation substrate and the cross-member.
13. The photovoltaic module as in any preceding clause, wherein at least one cross-member defines an extended area that reaches beyond opposite edges of the photovoltaic device.
14. The photovoltaic module as in any preceding clause, wherein a mounting aperture is positioned on the extended area of the cross-member.
15. The photovoltaic module as in any preceding clause, wherein the support structure defines a flange extending from an outer peak and oriented in a support plane.
16. The photovoltaic module as in any preceding clause, wherein the flange is a reinforced flange.
17. The photovoltaic module as in any preceding clause, wherein the support structure defines an X orientation.
18. The photovoltaic module as in any preceding clause, wherein the support structure defines a pair of arches.
19. The photovoltaic module as in any preceding clause, wherein the support structure comprises an inner rectangle and an outer rectangle, and wherein the support structure further comprises linking beams connecting the inner rectangle to the outer rectangle.
20. A photovoltaic module, comprising:
   a window substrate;
   a photovoltaic material;
   an encapsulation substrate, wherein the encapsulation substrate is laminated to the window substrate with the photovoltaic material positioned therebetween; and
   a support structure mounted onto a back surface of the encapsulation substrate, wherein the support structure includes ridges that define peaks and valleys that are configured to inhibit bowing of the support structure.

## Claims

1. A photovoltaic module (100), comprising:
a window substrate (104);
a photovoltaic material (106);
an encapsulation substrate (102), wherein the encapsulation substrate is laminated to the window substrate (104) with the photovoltaic material (106) positioned therebetween; and
a support structure (120) indirectly mounted onto a back surface (103) of the encapsulation substrate (102) to inhibit bowing of the encapsulation substrate (102).

2. The photovoltaic module as in claim 1, wherein the support structure (120) does not contact the encapsulation substrate.

3. The photovoltaic module as in claim 1 or claim 2, wherein a spacing is defined between the photovoltaic module (100) and the support structure (120) to allow airflow between the photovoltaic module and the support structure.

4. The photovoltaic module as in claim 1, 2 or 3, further comprising:
an adhesive strip (124) positioned between the encapsulation substrate (102) and the support structure (120).

5. The photovoltaic module as in any preceding claim, wherein the support structure (120) includes ridges (126) that define peaks (128) and valleys (130).

6. The photovoltaic module as in claim 5, wherein the ridges (126) have a depth that is greater than a thickness of the laminate formed by the encapsulation substrate (102), the photovoltaic material (106), and the window substrate (104).

7. The photovoltaic module as in claim 5 or claim 6, wherein an adhesive strip (124) is positioned between the valleys (130) of the support structure (120) and the back surface (103) of the encapsulation substrate (102).

8. The photovoltaic module as in any preceding claim, wherein the support structure (120) comprises a first cross-member (140) and a second cross-member (142), wherein each of the first cross-member (140) and the second cross-member (142) span across the back surface (103) of the encapsulation substrate (102), and wherein each of the first cross-member and the second cross-member includes at least one ridge (126) defining a peak (128) and a valley (130).

9. The photovoltaic module as in claim 8, wherein the first cross-member (140) and the second cross-member (142) are oriented substantially parallel to each other.

10. The photovoltaic module as in claim 8 or claim 9, wherein the support structure (120) further comprises a linking member (150, 152) extending from the first cross-member (140) to the second cross-member (142) and connected thereto, and wherein, preferably, the linking member (150, 152) is positioned between the back surface (103) of the encapsulation substrate (102) and the cross-member.

11. The photovoltaic module as in claim 8, 9 or 10, wherein at least one cross-member (150, 152) defines an extended area that reaches beyond opposite edges of the photovoltaic device, and wherein, preferably, a mounting aperture (148) is positioned on the extended area of the cross-member (140, 142).

12. The photovoltaic module as in any preceding claim, wherein the photovoltaic module (100) is frameless.

13. The photovoltaic module as in any preceding claim 1, wherein the support structure (120) defines at least one of:
a flange (122) extending from an outer peak and oriented in a support plane;
an X orientation, and
a pair of arches.

14. The photovoltaic module as in claim 13, wherein the support structure (120) defines a flange (122), and the flange is a reinforced flange.

15. The photovoltaic module as in any preceding claim, wherein the support structure (120) comprises an inner rectangle (170) and an outer rectangle (172), and wherein, preferably, the support structure (120) further comprises linking beams connecting the inner rectangle to the outer rectangle.
